# EUROPEAN PATENT SPECIFICATION

(11) **EP 0 583 342 B1**
(45) Date of publication and mention of the grant of the patent: **30.10.1996**
(21) Application number: 92910421.4
(22) Date of filing: 07.05.1992
(51) Int. Cl.: F16L 27/00, F16L 43/00

(54) **AN ADJUSTABLE PIPE BEND FOR DRAIN PIPES**
EINSTELLBARER ROHRBOGEN FÜR ABFLUSSROHRE
TUYAU COUDE REGLABLE POUR DES TUYAUX D'ECOULEMENT

(30) Priority: 07.05.1991 DK 851/91; 17.09.1991 DK 1609/91
(43) Date of publication of application: 23.02.1994
(73) Proprietor: JOTI VVS A/S, N-0602 Oslo (NO)
(72) Inventor: OLSSON, Jan, DK-4690 Haslev (DK)
(74) Representative: Roerboel, Leif
(86) International application number: DK9200147
(87) International publication number: WO9219901

(56) References cited:
- EP-A- 0 119 782
- EP-A- 0 382 971
- DE-A- 2 750 649
- DE-A- 3 825 866
- US-A- 1 836 336

## Description

This invention relates to an adjustable pipe bend for drain pipes, particularly for waste pipes from floor drains, handwash bowls, kitchen sinks etc., comprising at least two pipe bend parts having abutting end portions extending in a plane which is inclined relative to the main axis of the respective pipe bend part, said pipe bend parts being rotatably connected to each other at said end portions for rotation only about an axis perpendicular to said plane or planes, and where said plane or each said planes form(s) an angle of 22,5° with a plane perpendicular to the main axis of the respective pipe bend part, the main axis of adjacent pipe bend parts for all mutual rotational positions of said pipe bend parts either intersecting each other or being substantially coincident, the end portions of adjacent pipe bend parts being rotatably interconnected by means of elements shaped as true bodies of rotation about said axis of rotation.

Besides rigid pipe bends which are commercially available with bending angles of e.g. 15°, 30° and 45°, and which possibly for instance in form of a spigot-and-socket pipe bend may be combined with a similar pipe bend and be rotated in relation thereto to form an arbitrary other bending angle as e.g. disclosed in EP-A1-0 119 782, there are on the market adjustable pipe bends of the above identified type comprising two pipe bend parts which by rotation relative to each other may be adjusted to an arbitrary bending angle up to e.g. 90°.

In such a known adjustable pipe bend shown in US-A-1 836 336 each of the pipe bend parts are bent along a curved middle axis so that each of the abutting end portions forms an angle of 22,5° with the main axis of the respective pipe bend part. The end portions, which are circular having a circular light opening, are rotatably secured to each other by means of rim-flanges sealed against each other in a hollow, annularly shaped securing element. This known pipe bend is mechanically complicated but presents particularly that disadvantage that when set to small bending angles it presents a tortuous path for or a "break" in the flow passage through the pipe bend which increases the resistance to flow through the pipe bend but particularly acts as a place for depositing contaminants from the waste materials in the drain pipe which causes clogging of the pipe bend. Even if Fig. 11 of the above US reference shows parallel pipe bend parts with coincident axis there is a considerable "break" in the flow path at the joint.

It is the object of the invention to provide an adjustable pipe bend of the initially mentioned type which is simpler mechanically constructed than the known ones and therefore cheaper to produce, and which for all of the set bending angles but particularly for the small ones presents a minimal obstruction for the flow passage through the pipe bend and does not show noticeable tortuousness of or "breaks" in the flow passage.

According to the invention this object is obtained by an adjustable pipe bend of the type mentioned which is generally characterized in that said elements are placed in between the outer periphery of said pipe bend and the light pipe opening, and each element forming a half-part of a rotatable connection comprising interengaging ribs and grooves and incorporating an O-ring seal, and that the main axis of said pipe bend parts being straight lines.

A first embodiment of the adjustable pipe bend according to the invention is characterized in that it comprises two pipe bend parts each of which having a further end portion adapted to be connected to an element of said drain pipe. In this embodiment the bending angle may be optionally set between 0° and 45°.

Another embodiment of the adjustable pipe bend according to the invention is characterized in that it comprises three pipe bend parts, namely two outer parts and an intermediate part symmetrical about a midplane perpendicular to its main axis, each of said outer parts having a further end portion adapted to be connected to an element of said drain pipe. This embodiment will allow for optionally setting of the bending angle between 0° and 90°.

The pipe bend parts of the adjustable pipe bend according to the invention are preferably injection-moulded parts of a plastics material.

In the following the invention will be described more detailed with reference to the drawings in which:
Figs. 1 to 3 show a first embodiment of the adjustable pipe bend according to the invention, and
Figs. 4 and 5 another embodiment of the inventive pipe bend.

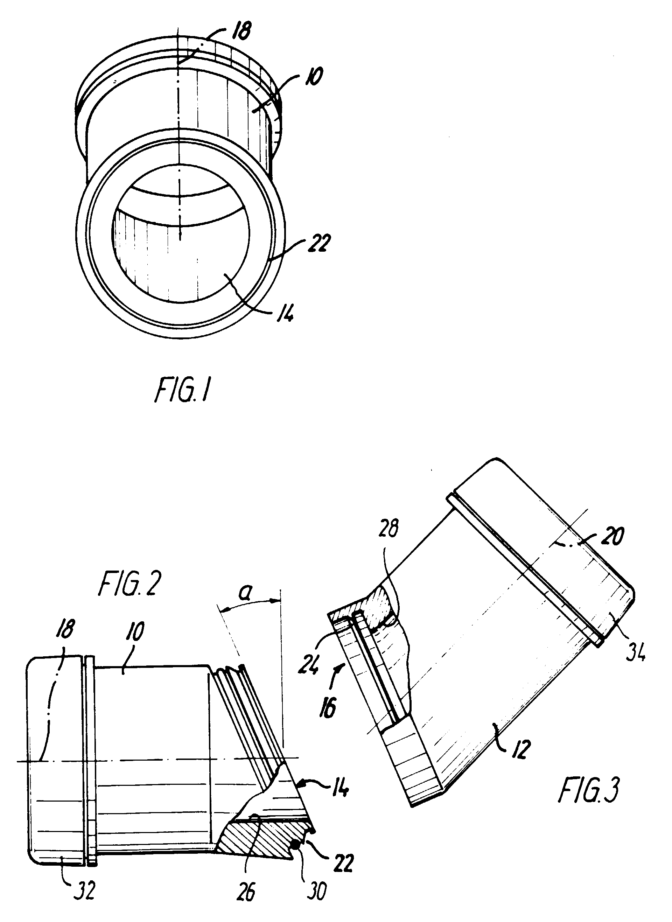

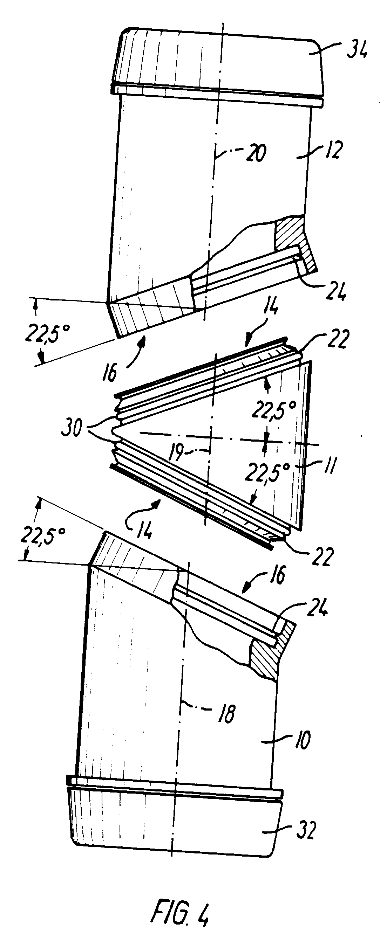

In Figs. 1 to 3 is shown a first embodiment of the invention comprising a first pipe bend part 10 shown from the coupling end thereof in Fig. 1, and in elevation and partly in axial section in Fig. 2, respectively, and a second pipe bend part 12 shown in elevation and partly in axial section in Fig. 3.

As shown in Fig. 2 the first pipe bend part 10 has an end portion generally designed as 14 which is inclined an angle α of 22,5° relative to a plane perpendicular to the main axis 18 of the first pipe bend part 10. Similarly the second pipe bend part 12 shown in Fig. 3 has an end portion generally designed as 16 and also inclined an angle of 22,5° relative to the main axis 20 of the second pipe bend part 12.

The end portions 14 and 16 of the first and second pipe bend parts, 10 and 12 respectively, are configured as bodies of rotation about an axis of rotation generally perpendicular to each of said end portions 14 and 16, respectively, said bodies of rotation having ribs and grooves together designed as 22 and 24, respectively, which are placed outside the light opening of the through bores 26 and 28, respectively of parts 10 and 12.

The ribs and grooves 22 of the pipe bend part 10 are formed as the male part and the ribs and grooves 24 of the pipe bend part 12 are formed as the female part of an interengageable snap-lock connection which when snapped together allows for roation of the pipe bend parts 10 and 12 relative to each other about said axis of rotation.

In connection with the male snap-lock part 22 on the first pipe bend part 10 an O-ring seal 30 is provided in a corresponding groove in order to provide sealing against a generally cylindrical surface of the female snap-lock part 24 on the second pipe bend part 12.

The other end portions 32 and 34 of the pipe bend parts 10 and 12, respectively, are provided with per se known means such as sockets for securing them to pipe elements (not shown) in a drainage system.

The pipe bend parts 10 and 12 may by being turned relative to each other be set to any bending angle between 0° and 45°, and their axis 18 and 20, respectively, will either be substantially coincident or intersect each other.

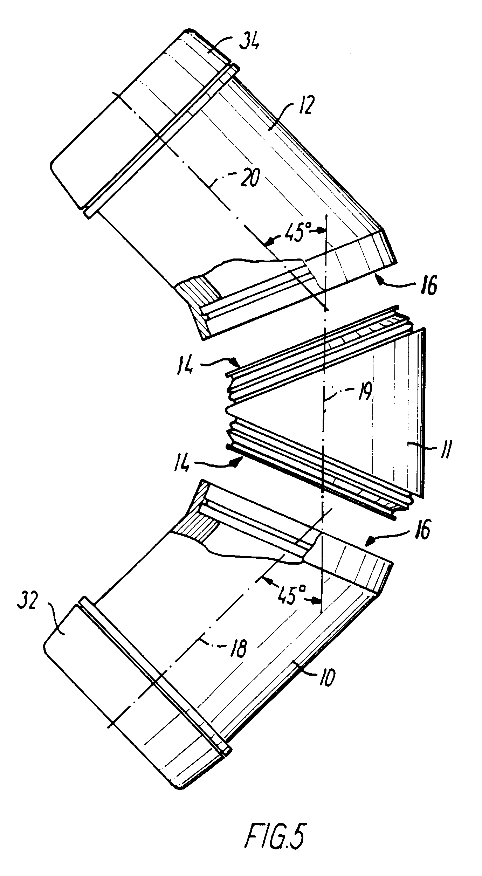

Figs. 4 and 5 show another embodiment of the invention both in an exploded view and more particularly shows Fig. 4 the pipe bend in a straight position, i.e. having a bending angle of 0°, and Fig. 5 shows the pipe bend in a position where the bending angle is 90°.

In Figs. 4 and 5 parts identical or similar to those shown in Figs. 1 to 3 have been given the same reference numerals.

In this embodiment the pipe bend comprises three parts, namely a first pipe bend part 10, a second pipe bend part 12, and an intermediate pipe bend part 11.

The first and second pipe bend parts 10 and 12, respectively, are configured exactly as the pipe bend part 12 of the first embodiment shown in Fig. 3 having end portions 16 inclined an angle of 22,5° relative to a plane perpendicular to the main axis 18 and 20 of pipe bend parts 10 and 12, respectively. The end portions 16 having ribs and grooves 24 therein forming the female part of a snap-lock connection.

The intermediate pipe bend part 11 is symmetrical about a midplane perpendicular to its main axis 19, and its end portions 14 form an angle of 22,5° with said midplane. The end portions 14 having ribs and grooves 22 thereon forming a male part of the snap-lock connection. Further an O-ring 30 is placed in a corresponding groove in each of the end portions 14.

The other end portions 32 and 34 of the pipe bend parts 10 and 12, respectively, are as in the first embodiment shown in Figs. 1 to 3 provided with per se known means such as sockets for securing them to a drain pipe element (not shown) in a drainage system. In this embodiment the three pipe bend parts 10, 11 and 12 may be turned relative to each other to set any bending angle between 0° and 90°, and the axis of adjacent pipe bend parts 10, 11 or 11, 12 will for any set bending angle of the pipe bend either intersect each other or be substantially coincident.

In both of the above described embodiments the tortuous flow path present in known pipe bends of a similar type is avoided for any set angle of the pipe bend while maintaining an unobstructed light opening for the passage of flow therethrough.

The pipe bend parts 10, 11 and 12 may be made of any suitable material and in any suitable way but it is preferred that the parts are made by injection moulding of a plastics material.

Modifications of the pipe bend according to the invention are possible within the scope of the appended claims. For example may in the embodiment shown in Figs. 4 and 5 the first and second pipe bend parts 10 and 12, respectively, be formed exactly as the first and second pipe bend parts 10 and 12 of the first embodiment shown in Figs. 1 to 3, i.e. with pipe bend part 10 having a male part 22 and pipe bend part 12 having a female part 24 of a snap-lock connection while the intermediate pipe bend part 11 has a female part 24 for engagement with the male part 22 of pipe bend part 10 and a male part 22 for engagement with the female part 24 of pipe bend part 12. In such a modification the first and second pipe bend parts 10 and 12 of the first embodiment shown in Figs. 1 to 3 may be supplemented with such an intermediate pipe bend part 11 to form an adjustable pipe bend similar to the embodiment shown in Figs. 4 and 5. Also, while the end portions 32 and 34 of the pipe bend parts 10 and 12, respectively, as shown in the drawings are provided with connection means such as sockets, it will be understood that either of the end portions 32 or 34 may be formed as a spigot end portion or alternatively may be provided with an external thread as it is well known in the art.

## Claims

1. An adjustable pipe bend for drain pipes, particularly for waste pipes from floor drains, handwash bowls, kitchen sinks, etc., comprising at least two pipe bend parts (10,11,12) having abutting end portions (14,16) extending in a plane which is inclined relative to the main axis (18,19,20) of the respective pipe bend part (10,11,12), said pipe bend parts (10,11,12) being rotatably connected to each other at said end portions (14,16) for rotation only about an axis perpendicular to said plane or planes and where said plane or each said planes form(s) an angle of 22,5° with a plane perpendicular to the main axis (18,19,20) of the respective pipe bend part (10,11,12), the main axis (18,19,20) of adjacent pipe bend parts (10, 11, 12) for all mutual rotational positions of said pipe bend parts (10,11,12) either intersecting each other or being substantially coincident, and the end portions (14,16) of adjacent pipe bend parts being rotatably interconnected by means of elements (22,24) shaped as true bodies of rotation about said axis of rotation, **characterized in** that said elements (22,24) are placed in between the outer periphery of said pipe bend and the light pipe opening, and each of said elements (22,24) forming half-part of a rotatable connection comprising interengaging ribs and grooves and incorporating an O-ring seal (30), and that the main axis (18,19,20) of said pipe bend parts (10,11,12) being straight lines.

2. An adjustable pipe bend according to claim 1 **characterized in** that it comprises two pipe bend parts (10,12) each of which having a further end portion (32,34) adapted to be connected to an element of said drain pipe.

3. An adjustable pipe bend according to claim 1 **characterized in** that it comprises three pipe bend parts (10,11,12), namely two outer parts (10,12) and an intermediate part (11) symmetrical about a midplane perpendicular to its main axis (19), each of said outer parts (10,12) having a further end portion (32,34) adapted to be connected to an element of said drain pipe.

4. An adjustable pipe bend according to any of the preceding claims **characterized in** that said pipe bend parts (10,11,12) are injection-moulded parts of a plastics material.

## Patentansprüche

1. Einstellbarer Rohrkrümmer für Abflußrohre, insbesondere für Abwasserrohre von Abflüssen, Handwaschbecken, Küchenspülen etc, bestehend aus wenigstens zwei Rohrkrümmerteilen (10, 11, 12) mit aneinanderliegenden Endabschnitten (14, 16), die sich in einer Ebene erstrecken, die relativ zur Hauptachse (18, 19, 20) des jeweiligen Rohrkrümmerteils (10, 11, 12) geneigt ist, wobei die Rohrkrümmerteile (10, 11, 12) an den Endabschnitten (14, 16) zur Drehung nur um eine Achse senkrecht zur Ebene oder zu ebenen drehbar verbunden sind, und die Ebene oder jede der Ebenen einen Winkel von 22,5° mit einer Ebene senkrecht zur Hauptachse (18, 19, 20) des jeweiligen Rohrkrümmerteils (10, 11, 12) bildet bzw. bilden, und die Hauptachse (18, 19, 20) benachbarter Rohrkrümmerteile (10, 11, 12) für alle gegenseitigen Drehpositionen der Rohrkrümmerteile (10, 11, 12) einander entweder schneiden oder im wesentlichen koinzident sind, und die Endabschnitte (14, 16) benachbarter Rohrkrümmerteile durch Elemente (22, 24) drehbar verbunden sind, die als Rotationskörper um die Drehachse geformt sind,
**dadurch gekennzeichnet, daß**
die Elemente (22, 24) zwischen dem Außenumfang des Rohrkrümmers und der lichten Rohröffnung angeordnet sind, daß jedes der Elemente (22, 24) die Hälfte einer Drehverbindung bildet, die ineinandergreifende Rippen und Nuten aufweist, die eine O-Ringdichtung (30) enthalten, und daß die Hauptachse (18, 19, 20) der Rohrkrümmerteile (10, 11, 12) gerade Linien sind.

2. Einstellbarer Rohrkrümmer nach Anspruch 1,
**dadurch gekennzeichnet, daß**
er zwei Rohrkrümmerteile (10, 12) aufweist, von denen jeder einen weiteren Endabschnitt (32, 34) aufweist, der mit einem Element des Abflußrohres verbindbar ist.

3. Einstellbarer Rohrkrümmer nach Anspruch 1,
**dadurch gekennzeichnet, daß**
er drei Rohrkrümmerteile (10, 11, 12) aufweist, nämlich zwei äußere Teile (10, 12) und einen Zwischenteil (11), der um eine Mittelebene senkrecht zu seiner Hauptachse (19) symmetrisch ist, wobei jeder der äußeren Teile (10, 12) einen weiteren Endabschnitt (32, 34) hat, der mit einem Element des Abflußrohres verbindbar ist.

4. Einstellbarer Rohrkrümmer nach einem der vorhergehenden Ansprüche,
**dadurch gekennzeichnet, daß**
die Rohrkrümmerteile (10, 11, 12) Spritzgußteile aus Kunststoffmaterial sind.

## Revendications

1. Un tube coudé réglable pour des tubes d'évacuation, en particulier pour les tubes d'évacuation des siphons de sol, des lavabos, des éviers, etc., comprenant au moins deux parties de tube coudé (10, 11, 12) ayant des parties d'extrémité contigues (14, 16) qui s'étendent dans un plan qui est incliné par rapport à l'axe principal (18, 19, 20) de la partie de tube coudé respective (10, 11, 12), lesdites parties de tube coudé (10, 11, 12) étant reliées à rotation l'une à l'autre auxdites parties d'extrémité (14, 16) pour tourner uniquement autour d'un axe perpendiculaire audit plan ou auxdits plans, ledit plan ou chacun desdits plans formant un angle de 22,5° avec un plan perpendiculaire à l'axe principal (18, 19, 20) de la partie de tube coudé respective (10, 11, 12), les axes principaux (18, 19, 20) des parties de tube coudé adjacentes (10, 11, 12), pour toutes les positions de rotation réciproque desdites parties de tube coudé (10, 11, 12), venant se couper l'un l'autre ou coïncidant sensiblement, et les parties d'extrémité (14, 16) des parties de tube coudé adjacentes étant interconnectées de façon rotative au moyen d'éléments (22, 24) conformés comme de véritables corps de révolution autour dudit axe de rotation, caractérisé en ce que lesdits éléments (22, 24) sont placés entre la périphérie extérieure dudit tube coudé et l'ouverture à paroi mince du tube, et chacun desdits éléments (22, 24) formant une moitié d'un raccord rotatif comprenant des nervures et des rainures qui s'engagent les unes dans les autres de façon alternée et comprenant un joint torique (30), et en ce que l'axe principal (18, 19, 20) desdites parties de tube coudé (10, 11, 12) est rectiligne.

2. Un tube coudé réglable selon la revendication 1, caractérisé en ce qu'il comporte deux parties de tube coudé (10, 12), chacune d'entre elles ayant une autre partie d'extrémité (32, 34) susceptible d'être reliée à un élément dudit tube d'évacuation.

3. Un tube coudé réglable selon la revendication 1, caractérisé en ce qu'il comporte trois parties de tube coudé (10, 11, 12), à savoir deux parties extérieures (10, 12) et une partie intermédiaire (11) symétrique par rapport à un plan médian perpendiculaire à son axe principal (19), chacune desdites parties extérieures (10, 12) ayant une autre partie d'extrémité (32, 34) susceptible d'être reliée à un élément dudit tube d'évacuation.

4. Un tube coudé réglable selon l'une quelconque des revendications qui précèdent, caractérisé en ce que lesdites parties de tube coudé (10, 11, 12) sont des pièces en matière plastique moulées par moulage à injection.
